## Europäisches Patentamt

## European Patent Office

## Office européen des brevets

(19)

(11) Veröffentlichungsnummer: **0 206 121**
**B1**

(12)

# EUROPÄISCHE PATENTSCHRIFT

(45) Veröffentlichungstag der Patentschrift:
13.09.89

(21) Anmeldenummer: 86107975.4

(22) Anmeldetag: 11.06.86

(51) Int. Cl.⁴: **C23C 4/06,** C23C 4/10,
C23C 4/12, C23C 4/18,
A47J 37/01, A47J 37/10,
D06F 75/38, B05D 1/08

(54) Verfahren zum Beschichten von Haushaltsgegenständen mit einer Antihaftschicht und Haushaltsgegenstand.

(30) Priorität: 14.02.86 DE 3604762
22.06.85 DE 3522400

(43) Veröffentlichungstag der Anmeldung:
30.12.86 Patentblatt 86/52

(45) Bekanntmachung des Hinweises auf die Patenterteilung:
13.09.89 Patentblatt 89/37

(84) Benannte Vertragsstaaten:
AT BE CH DE FR GB IT LI LU NL SE

(56) Entgegenhaltungen:
CH-A- 632 142
DE-A- 3 316 348
DE-B- 1 777 186
DE-B- 1 952 846
GB-A- 944 836
GB-A- 956 740
US-A- 3 905 138

(73) Patentinhaber: Heinzel, Winfried, Rosenhag 10,
D-7758 Meersburg(DE)

(72) Erfinder: Heinzel, Winfried, Rosenhag 10,
D-7758 Meersburg(DE)

(74) Vertreter: Witte, Alexander, Dr.-Ing., Witte, Weller &
Hilgenfeldt Patent- und Rechtsanwälte
Augustenstrasse 7, D-7000 Stuttgart 1(DE)

ACTORUM AG

**Beschreibung**

Die Erfindung betrifft ein Verfahren zum Beschichten eines Haushaltsgegenstandes mit den Verfahrensschritten:
- Aufbringen einer eine Nickellegierung enthaltenden Haftgrundschicht im Plasmasprühverfahren auf eine Oberfläche des Haushaltsgegenstandes mit einer Schichtdicke zwischen 5 μm und 50 μm.
- Aufbringen einer ein Aluminiumoxid enthaltenden Hartstoffschicht im Plasmasprühverfahren auf die Haftgrundschicht mit einer Schichtdicke zwischen 30 μm und 150 μm.
- Aufsprühen einer ein Fluorethylenpolymer enthaltenden Kunststoff-Antihaftschicht auf die Hartstoffschicht;
- Einbrennen der Antihaftschicht auf die Hartstoffschicht bei einer Temperatur zwischen 200°C und 500°C, wobei der Kunststoff in einer Menge aufgesprüht wird, daß die Antihaftschicht nach dem Einbrennen Täler zwischen Spitzen der Hartstoffschicht ausfüllt, die Spitzen jedoch nur dünn überdeckt.

Es ist bekannt, z.B. Gefäße mit Antihaftschichten zu versehen, indem man zunächst die Innenoberfläche des im allgemeinen metallischen Gefäßes durch Sandstrahlen aufrauht, dann die Antihaftschicht, üblicherweise auf der Basis von Polytetrafluorethylen (PTFE) aufbringt, beispielsweise aufsprüht, und schließlich die Antihaftschicht einbrennt.

Aus der GB-A 956 740 ist ein Verfahren zum Aufbau und Herstellen einer Oberfläche bekannt, das für Haushaltsgegenstände, z.B. Kochtöpfe, Bratpfannen und Bügeleisen, verwendet werden soll. Bei dem bekannten Verfahren wird zunächst eine metallische Oberfläche des Haushaltsgegenstandes z.B. durch Sandstrahlen aufgerauht. Alsdann wird eine Schicht aus einer vorzugsweise Aluminium, Kupfer, Kupfer-Nickel oder Eisen enthaltenden Legierung oder aus Glas in Form einer porösen Schicht aufgebracht. Auf diese poröse Schicht mit einer Dicke zwischen 50 μm und 380 μm wird schließlich ein Antihaftmaterial, beispielsweise PTFE, aufgebracht. Die PTFE-Schicht wird in einer derartigen Dicke aufgebracht, daß die poröse Legierungsschicht vollkommen überdeckt wird. Die Antihaftschicht wird alsdann unter Wärmebehandlung ausgehärtet. Schließlich erfolgt eine mechanische Nachbehandlung mittels einer Schwabbelscheibe, bei der die Antihaftschicht wieder so weit mechanisch abgetragen wird, daß Spitzen oder Inseln der porösen Legierungsschicht wieder zum Vorschein kommen.

Bei mit diesem bekannten Verfahren hergestellten Haushaltsgegenständen hat zwar die Antihaftschicht ihrerseits eine bessere Haftung auf der Oberfläche des Haushaltsgegenstandes, als wenn die Antihaftschicht nach dem eingangs genannten bekannten Vorgehen unmittelbar auf die sandgestrahlte metallische Oberfläche des Haushaltsgegenstandes aufgebracht worden wäre, im praktischen Gebrauch kann jedoch die Antihaftschicht immer noch abgelöst werden. Auch ist die mechanische Widerstandsfähigkeit der Antihaftschicht nur unwesentlich verbessert worden, weil die Legierungsschicht keine größere Härte aufweist als das metallische Material des Haushaltsgegenstandes. Schließlich ist die abschließende mechanische Oberflächenbehandlung der Antihaftschicht äußerst umständlich und erfordert getrennte Bearbeitungsplätze, so daß eine Fließfertigung mit dem bekannten Verfahren nicht möglich ist. Vor allem aber erscheint der vorgeschlagene abschließende mechanische Verfahrensschritt des Abschwabbelns in der Praxis kaum einsetzbar, weil unter Serien-Fabrikationsbedingungen kaum ein Abschwabbeln so reproduzierbar vorgenommen werden kann, daß Spitzen oder Inseln der aufgesprühten Legierungsschicht in definierter Größe aus der Antihaftschicht auftauchen.

Aus der GB-A 944 836 ist ein weiteres ähnliches Verfahren bekannt, bei dem eine Oberfläche einer Bratpfanne ebenfalls zunächst sandgestrahlt wird. Auf die sandgestrahlte Oberfläche wird dann mittels Flammspritzen eine poröse Oxidschicht aus Nickel und Chromoxiden sowie Aluminiumoxiden aufgebracht, und zwar in mehreren Lagen. Die Gesamtdicke der so gebildeten Oxidschicht beträgt etwa 170 μm. Die so aufgebrachte Oxidschicht wird, falls sie zu rauh in ihrer Oberfläche ausfällt, durch Abreiben mittels eines Oxid-Schleifsteins geglättet. Hierdurch soll gewährleistet werden, daß die nachfolgend aufgetragene Antihaftschicht die gesamte Oxidschicht überdeckt. Die Antihaftschicht wird aus einem Polyfluorkohlenstoff hergestellt und mittels eines Farbsprühgerätes in drei Durchgängen mit einer Gesamtdicke von etwa 76 μm aufgetragen. Die Antihaftschicht wird anschließend bei ca. 93°C getrocknet, dann bei 385°C ausgehärtet und schließlich nochmals bei 93°C für einen längeren Zeitraum ausgetrocknet.

Die mit diesem bekannten Verfahren hergestellten Gegenstände benutzen somit die Oxidschicht im wesentlichen als Haftvermittler zwischen dem metallischen Pfannenboden und der Antihaftschicht, deren Dicke fast halb so groß ist wie die Dicke der Oxidschicht selbst. Damit ist die Antihaftschicht nahezu ebenso verletzbar wie dies bei einer herkömmlich mit PTFE beschichteten Bratpfanne der Fall ist.

Der Erfindung liegt demgegenüber die Aufgabe zugrunde, ein Verfahren der vorstehend geschilderten Art dahingehend weiterzubilden, daß Haushaltsgegenstände mit extremer mechanischer Stabilität, gleichzeitig aber auch hervorragenden Antihafteigenschaften hergestellt werden können.

Gelöst wird diese Aufgabe durch die Kombination der eingangs aufgezählten Verfahrensmerkmale.

Die einzelnen Verfahrensmerkmale unterstützen sich dabei in vorteilhafter Weise. Durch ein Zusammenwirken der Haftgrundschicht und der Hartstoffschicht wird zunächst ein optimales Festhalten der Beschichtung am im allgemeinen metallischen Grund des Haushaltsgegenstandes erreicht. Vor allem aber ergibt das Zusammenwirken der feindimensionierten Antihaftschicht auf der Hartstoffschicht eine besonders vorteilhafte Wirkung. Dadurch, daß die Antihaftschicht die Spitzen der Hartstoffschicht lediglich dünn überdeckt, wird nämlich erreicht, daß die gebildete Oberfläche einerseits so hart wie eine Keramik, andererseits aber so gleitfähig wie eine PTFE-Beschichtung ist.

Bei bevorzugten Ausführungsformen des erfindungsgemäßen Verfahrens besteht die Haftgrundschicht aus einer Nickel-Aluminium-Legierung oder einer Chrom-Nickel-Legierung. Die Hartstoffschicht besteht hingegen vorzugsweise aus Aluminiumoxid oder einer Mischung aus Aluminiumoxid und Titanoxid. Für die Antihaftschicht wird in bevorzugter Weise PTFE verwendet.

Als Schichtdicken werden für die Haftgrundschicht vorzugsweise 10 µm bis 20 µm eingestellt, während die Hartstoffschicht vorzugsweise 60 µm dick sein soll.

Als Einbrenntemperatur für die Antihaftschicht wird vorzugsweise ein Bereich zwischen 250°C und 350°C verwendet.

Die Erfindung eignet sich besonders für bestimmte Haushaltsgefäße, insbesondere Pfannen, Töpfe und Backformen, die bekanntermaßen mit einer Antihaftschicht versehen sind, damit das Brat-, Rühr- oder Backgut dort nicht kleben bleibt. Derartige Haushaltsgefäße kommen beim Zubereiten der Speisen, insbesondere aber auch beim Reinigen, häufig mit harten Gegenständen, beispielsweise Löffeln, Gabeln, Schneebesen, Hebern u. dgl. in Berührung, so daß in herkömmlicher Weise aufgebrachte Antihaftschichten häufig nach länger andauerndem Gebrauch verkratzt sind oder sich sogar flächig lösen. Hier schafft die Erfindung Abhilfe, indem sie eine Antihaftschicht zur Verfügung stellt, die eine deutlich erhöhte Lebensdauer auch bei nicht besonders pfleglichem Umgang mit dem Haushaltsgefäß aufweist.

Besonders vorteilhaft läßt sich jedoch die Erfindung bei Gleitsohlen von Bügeleisen anwenden. Bekanntlich haben neuzeitige Bügeleisen ebenfalls eine Antihaftbeschichtung auf der Gleitsohle, damit man auch besonders empfindliche Gewebe mit geringem mechanischem Widerstand bügeln kann. Werden jedoch Kleidungsstücke gebügelt, die harte Elemente, insbesondere Metallknöpfe, Reißverschlüsse, Nieten o. dgl. aufweisen, kann dies dazu führen, daß die Antihaftschicht auf der Gleitsohle des Bügeleisens verkratzt wird oder sich flächig löst. Auch hier schafft die Erfindung in vorteilhafter Weise Abhilfe, indem die Lebensdauer der Gleitsohle deutlich verbessert wird.

Weitere Vorteile ergeben sich aus der Beschreibung, der beigefügten Zeichnung und den Ansprüchen.

Ausführungsbeispiele der Erfindung sind in der Zeichnung dargestellt und werden nachstehend anhand der Beschreibung näher erläutert. Es zeigen:

Fig. 1 eine Pfanne, teilweise geschnitten und im Ausschnitt stark vergrößert;
Fig. 2 eine Darstellung, ähnlich Fig. 1, jedoch für ein Bügeleisen;
Fig. 3 eine stark vergrößerte Schnittdarstellung einer Hartstoffschicht mit Antihaftschicht zur Erläuterung der Erfindung.

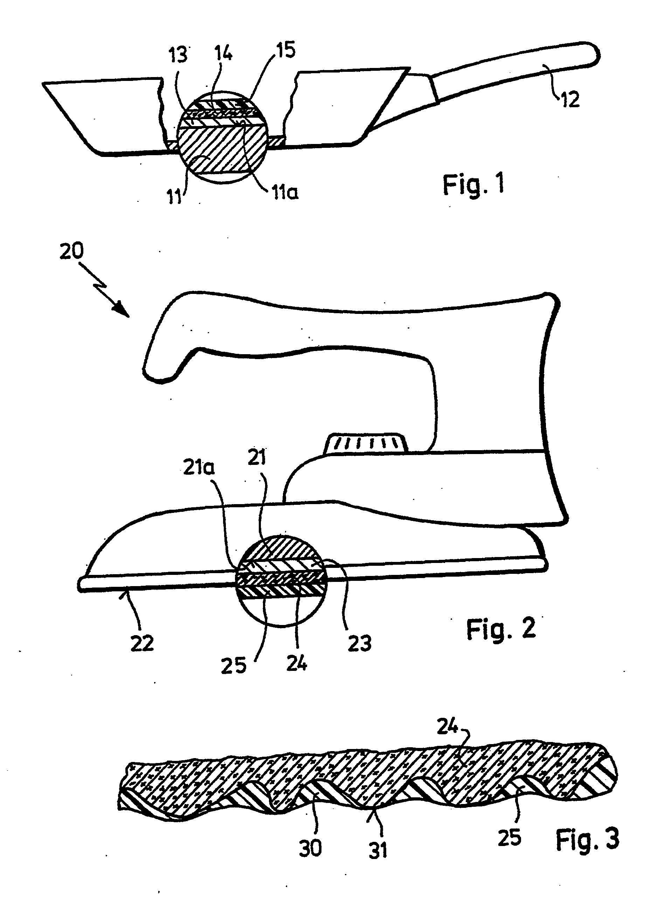

In Figur 1 bezeichnet 10 insgesamt eine Bratpfanne, die im wesentlichen aus einem metallischen Grundkörper 11 und einem Griff 12 besteht. Der metallische Grundkörper 11 kann aus Stahl, Edelstahl, Gußaluminium Gußeisen, Kupfer oder dgl. bestehen. Es sind aber auch keramische Pfannen im Rahmen der vorliegenden Erfindung verwendbar.

Der Grundkörper 11 weist eine Innenoberfläche 11a auf, die man bisher durch mechanische Verfahren, insbesondere durch Sandstrahlen, aufgerauht hat.

Im Gegensatz dazu ist erfindungsgemäß vorgesehen, die Innenoberfläche 11a im Plasmasprühverfahren zunächst mit einer Haftgrundschicht 13 zu versehen. Die Haftgrundschicht 13 besteht bevorzugt aus Nickel-Aluminium oder Chrom-Nickel, es sind jedoch auch andere Haftgrundschichten verwendbar, wie sie an sich aus der Technik des Plasmasprühverfahrens bekannt sind.

Auf die Haftgrundschicht 13 ist eine Hartstoffschicht 14, ebenfalls im Plasmasprühverfahren, aufgebracht. Die Hartstoffschicht 14 kann beispielsweise aus Aluminiumoxid oder einer Mischung Aluminiumoxid/Titanoxid bestehen, es sind jedoch auch hier andere Hartstoffschichten einsetzbar, wie sie an sich aus der Technik des Plasmasprühverfahrens bekannt sind.

Die Hartstoffschicht 14 ist an ihrer Oberseite mit einer an sich bekannten Antihaftschicht 15 versehen, die bevorzugt aus einem Kunststoff auf Fluoräthylenpolymer-Basis, insbesondere Polytetrafluoräthylen (PTFE) besteht. Die Antihaftschicht 15 wird bevorzugt auf die Hartstoffschicht 14 aufgesprüht. Nach dem Aufsprühen der Antihaftschicht 15 wird diese eingebrannt, wofür bevorzugt ein Temperaturbereich zwischen 200 und 500°C, vorzugsweise 250 und 350°C, insbesondere 300°C vorgesehen ist.

Es versteht sich, daß die in der Figur dargestellte Bratpfanne 10 lediglich als Beispiel für eine Vielzahl von Gefäßen zu verstehen ist, wie sie insbesondere als Küchengefäße Verwendung finden. Die Erfindung ist jedoch auch nicht auf Küchengefäße beschränkt sondern betrifft alle Arten von Gefäßen, die mit einer Antihaftschicht versehen sind.

In Fig. 2 ist mit 20 ein Bügeleisen bezeichnet, dessen Gleitsohle 22 die ausschnittsweise stark vergrößert dargestellte Struktur ähnlich derjenigen von Fig. 1 hat. Man erkennt, daß auf einen metallischen Grundkörper 21a zunächst eine Haftgrundschicht 23, auf diese eine Hartstoffschicht 24 und auf diese wiederum eine Antihaftschicht 25 aufgebracht wurde. Die Antihaftschicht 25 bildet die Unterseite der Gleitsohle 22.

Die Werkstoffe der Schichten 23 bis 25 und deren Abmessungen entsprechen sinngemäß denjenigen von Fig. 1.

Fig. 3 zeigt in weiter vergrößertem Ausschnitt die Hartstoffschicht 24, an deren Unterseite die Antihaftschicht 25 angebracht ist. Aufgrund der in der Realität unregelmäßigen Oberfläche der Hartstoffschicht 24 bilden sich dort Täler 30 und Spitzen 31. Es hat sich nun gezeigt, daß die Antihaftschicht 25 sich nicht gleichmäßig auf die Hartstoffschicht 24 auflegt, sondern vielmehr in den Tälern 30 dickere und auf den Spitzen 31 dünnere Bereiche der Antihaftschicht 25 entstehen. Wird nun mit der Gleitsohle 22 über einen metallischen Gegenstand, beispielsweise einen Reißverschluß, gebügelt, so verhindern die Spitzen 31, daß sich die metallischen Oberflächen des Reißverschlusses in die Täler 30 hineinarbeiten. Zwar wird vorübergehend während dieser Berührung der Spitzen 31 mit den metallischen Elementen des Reißverschlusses der dünne Bereich der Antihaftschicht 25 auf den Spitzen 31 abgetragen, es tritt jedoch insoweit ein "Selbstheilungseffekt" auf, als im darauffolgenden Bügeln auf einer textilen Oberfläche wiederum Bestandteile der Antihaftschicht 25 aus den Tälern 30 sich über die Spitzen 31 herüberziehen, so daß für die textilen Bereiche wieder eine durchgehende Antihaftschicht 25 mit entsprechend vermindertem mechanischem Reibungswiderstand zur Verfügung steht.

**Patentansprüche**

1. Verfahren zum Beschichten eines Haushaltsgegenstandes mit den Verfahrensschritten:
– Aufbringen einer eine Nickellegierung enthaltenden Haftgrundschicht (13; 23) im Plasmasprühverfahren auf eine Oberfläche (11a; 21) des Haushaltsgegenstandes, mit einer Schichtdicke zwischen 5 µm und 50 µm;
– Aufbringen einer ein Aluminiumoxid enthaltenden Hartstoffschicht (14; 24) im Plasmasprühverfahren auf die Haftgrundschicht (13; 23) mit einer Schichtdicke zwischen 30 µm und 150 µm;
– Aufsprühen einer ein Fluorethylenpolymer enthaltenden Kunststoff-Antihaftschicht (15; 25) auf die Hartstoffschicht (14; 24);
– Einbrennen der Antihaftschicht (15; 25) auf die Hartstoffschicht (14; 24) bei einer Temperatur zwischen 200°C und 500°C, wobei der Kunststoff in einer Menge aufgesprüht wird, daß die Antihaftschicht (15; 25) nach dem Einbrennen Täler (30) zwischen Spitzen (31) der Haftstoffschicht (24) ausfüllt, die Spitzen (31) jedoch nur dünn überdeckt.

2. Verfahren nach Anspruch 1, dadurch gekennzeichnet, daß die Haftgrundschicht (13; 23) aus einer Nickel-Aluminium-Legierung besteht.

3. Verfahren nach Anspruch 1, dadurch gekennzeichnet, daß die Haftgrundschicht (13; 23) aus einer Chrom-Nickel-Legierung besteht.

4. Verfahren nach einem der Ansprüche 1 bis 3, dadurch gekennzeichnet, daß die Hartstoffschicht (14; 24) aus Aluminiumoxid besteht.

5. Verfahren nach einem der Ansprüche 1 bis 3, dadurch gekennzeichnet, daß die Hartstoffschicht (14; 24) aus Aluminiumoxid/Titanoxid besteht.

6. Verfahren nach einem der Ansprüche 1 bis 5, dadurch gekennzeichnet, daß die Antihaftschicht (15; 25) aus Polytetrafluorethylen besteht.

7. Verfahren nach einem der Ansprüche 1 bis 6, dadurch gekennzeichnet, daß die Haftgrundschicht (13; 23) eine Dicke von 10 µm bis 20 µm aufweist.

8. Verfahren nach einem der Ansprüche 1 bis 7, dadurch gekennzeichnet, daß die Hartstoffschicht (14; 24) eine Dicke von 60 µm aufweist.

9. Verfahren nach einem der Ansprüche 1 bis 8, dadurch gekennzeichnet, daß die Antihaftschicht (15; 25) bei einer Temperatur zwischen 250°C und 350°C eingebrannt wird.

10. Verfahren nach einem der Ansprüche 1 bis 9, dadurch gekennzeichnet, daß die Oberfläche eine Innenoberfläche (11a) eines Bodens einer Pfanne (10) ist.

11. Verfahren nach einem der Ansprüche 1 bis 9, dadurch gekennzeichnet, daß die Oberfläche eine Oberfläche einer Gleitsohle eines Bügeleisens (20) ist.

**Claims**

1. Process for coating a domestic utensil, comprising the following process steps:
– applying an adhesive priming layer (13; 23) containing a nickel alloy by the plasma-spray process to a surface (11a; 21) of the domestic utensil, in a layer thickness of between 5 µm and 50 µm;
– applying a layer of hard material (14; 24) containing an aluminium oxide by the plasma-spray process to the adhesive priming layer (13; 23) in a layer thickness of between 30 µm and 150 µm;
– spraying a plastic anti-adhesion layer (15; 25) containing a fluoroethylene polymer on top of the layer of hard material (14; 24);
– baking the anti-adhesion layer (15; 25) onto the layer of hard material (14; 24) at a temperature of between 200°C and 500°C, the plastic being sprayed on in such a quantity that, after baking, the anti-adhesion layer (15; 25) fills valleys (30) between peaks (31) of the layer of hard material (24) but only thinly covers the peaks (31).

2. Process according to Claim 1, characterized in that the adhesive priming layer (13; 23) consists of a nickel/aluminium alloy.

3. Process according to Claim 1, characterized in that the adhesive priming layer (13; 23) consists of a chromium/nickel alloy.

4. Process according to one of Claims 1 to 3, characterized in that the layer of hard material (14; 24) consists of aluminium oxide.

5. Process according to one of Claims 1 to 3, characterized in that the layer of hard material (14; 24) consists of aluminium oxide/titanium oxide.

6. Process according to one of Claims 1 to 5, characterized in that the anti-adhesion layer (15; 25) consists of polytetrafluoroethylene.

7. Process according to one of Claims 1 to 6, characterized in that the adhesive priming layer (13; 23) has a thickness of from 10 µm to 20 µm.

8. Process according to one of Claims 1 to 7, characterized in that the layer of hard material (14; 24) has a thickness of 60 µm.

9. Process according to one of Claims 1 to 8, characterized in that the anti-adhesion layer (15; 25) is baked in at a temperature of between 250°C and 350°C.

10. Process according to one of Claims 1 to 9, characterized in that the surface is an inner surface (11a) of a bottom of a pan (10).

11. Process according to one of Claims 1 to 9, characterized in that the surface is a surface of a sliding bottom plate of an iron (20).

## Revendications

1. Procédé de revêtement pour articles ménagers, comportant les phases suivantes:
- Application, selon le procédé de projection au plasma, d'un revêtement adhésif (13; 23) contenant un alliage de nickel sur une surface (11a; 21) de l'article ménager, l'épaisseur du revêtement étant comprise entre 5 μm et 50 μm;
- Application, selon le procédé de projection au plasma, d'un revêtement dur (14; 24) sur le revêtement adhésif (13; 23), l'épaisseur du revêtement étant comprise entre 30 μm et 150 μm;
- Pulvérisation, sur le revêtement dur (14; 24), d'un revêtement anti-adhésif plastique (15; 25) contenant un polymère de fluoréthylène;
- Cuisson du revêtement anti-adhésif (15; 25) sur le revêtement dur (14; 24) à une température comprise entre 200°C et 500°C; la quantité de matière synthétique pulvérisée est telle que le revêtement anti-adhésif (15; 25) cuit remplit les creux (30) entre les crêtes (31) du revêtement dur (24), et ne recouvre les crêtes (31) que d'une couche mince.

2. Procédé, selon la revendication 1, caractérisé en ce que le revêtement adhésif (13; 23) est en alliage de nickel et d'aluminium.

3. Procédé, selon la revendication 1, caractérisé en ce que le revêtement adhésif (13; 23) est en alliage de chrome et de nickel.

4. Procédé, selon l'une des revendications 1 à 3, caractérisé en ce que le revêtement dur (14; 24) est en oxyde d'aluminium.

5. Procédé, selon l'une des revendications 1 à 3, caractérisé en ce que le revêtement dur (14; 24) est en oxyde d'aluminium/oxyde de titane.

6. Procédé, selon l'une des revendications 1 à 5, caractérisé en ce que le revêtement anti-adhésif (15; 25) est en polytétrafluoréthylène.

7. Procédé, selon l'une des revendications 1 à 6, caractérisé en ce que l'épaisseur du revêtement adhésif (13; 23) est comprise entre 10 μm et 20 μm.

8. Procédé, selon l'une des revendications 1 à 7, caractérisé en ce que l'épaisseur du revêtement dur (14; 24) est de 60 μm.

9. Procédé, selon l'une des revendications 1 à 8, caractérisé en ce que la température de cuisson du revêtement anti-adhésif (15; 25) est comprise entre 250°C et 350°C.

10 Procédé, selon l'une des revendications 1 à 9, caractérisé en ce que la surface considérée est la surface interne (11a) du fond d'une poêle (10).

11. Procédé, selon l'une des revendications 1 à 9, caractérisé en ce que la surface considérée est la surface d'une semelle de fer à repasser (20).

Fig. 1

Fig. 2

Fig. 3